**Europäisches Patentamt**

**European Patent Office**

**Office européen des brevets**

(19)

(11) Numéro de publication: **0 151 065**
**B1**

(12) **FASCICULE DE BREVET EUROPEEN**

(45) Date de publication du fascicule du brevet: **23.05.90**

(51) Int. Cl.⁵: **G 02 B 6/28, G 02 B 6/38**

(21) Numéro de dépôt: **85400090.8**

(22) Date de dépôt: **18.01.85**

(54) **Coupleur-répartiteur à fibres optiques et son procédé de fabrication.**

(30) Priorité: **31.01.84 FR 8401492**

(43) Date de publication de la demande:
**07.08.85 Bulletin 85/32**

(45) Mention de la délivrance du brevet:
**23.05.90 Bulletin 90/21**

(84) Etats contractants désignés:
**AT BE CH DE FR GB IT LI LU NL SE**

(56) Documents cités:
**EP-A-0 005 792**
**DE-A-2 930 454**
**JP-A-5 310 445**
**JP-A-52 140 345**
**JP-A-54 161 048**
**US-A-4 109 369**

**TRANSACTIONS OF THE IECE OF JAPAN, vol. E
60, no. 3, mars 1977, pages 133-134, T. MATSUI
et al.: "Optical branch for optical data
distribution"**

(73) Titulaire: **ALLIANCE TECHNIQUE INDUSTRIELLE
Zone Industrielle de Saint-Guénault 6, rue Jean
Mermoz Courcouronnes
F-91000 Evry (FR)**

(72) Inventeur: **Malavieille, François-Louis
6, rue de Vouillé
F-75015 Paris (FR)**

(74) Mandataire: **Plaçais, Jean-Yves et al
Cabinet Netter, 40, rue Vignon
F-75009 Paris (FR)**

(56) References cited:

**PATENTS ABSTRACTS OF JAPAN, vol. 4, no. 10,
(E-167), 25 janvier 1980, page 151 E 167 & JP - A -
54 151 048**
**PATENTS ABSTRACTS OF JAPAN, vol. 6, no.
168 (P-139) 1046r, 2 septembre 1982, page 136 &
JP - A - 57 85 015**

## Description

L'invention concerne un coupleur-répartiteur à fibres optiques.

Les transmissions par fibres optiques connaissent un essor considérable. Le "câblage" en fibres optiques à grande échelle, en particulier le câblage de grandes villes, nécessite que l'on dispose de différents types de moyens d'interconnexion entre fibres optiques. L'interconnexion de base se fait entre deux fibres mises bout à bout.

Dans ses Demandes de Brevet européen N° 84400448.1 (publiée sous le N° 0 122 169) et No 84401575.0, la Demanderesse a proposé une technique permettant ladite interconnexion de base, dans des conditions satisfaisantes tant au plan économique qu'à celui des performances.

Un autre problème se pose dans le câblage par fibres optiques. Le signal présent sur une fibre optique doit aussi pouvoir être distribué sur plusieurs fibres, en règle générale sur deux fibres. On appellera ci-après coupleur-répartiteur à fibres optiques le dispositif capable de cette fonction.

Les solutions connues jusqu'à présent pour réaliser un coupleur-répartiteur à fibres optiques font intervenir des opérations de fabrication délicates, en raison notamment de l'impératif d'obtenir un positionnement très précis des fibres à connecter les unes par rapport aux autres.

La présente invention vient, au contraire, apporter une solution nouvelle, qui est d'une grande simplicité.

Le coupleur-répartiteur à fibres optiques proposé est du type comprenant d'un côté deux fibres optiques polies latéralement en biseau à l'une de leurs extrémités, lesquelles extrémités sont positionnées pour définir en réunion une face frontale commune, de section droite sensiblement égale à celle d'une seule fibre, et de l'autre côté une autre fibre ou une autre paire de fibres optiques disposées comme les deux fibre optiques précitées pour définir en réunion une face frontale commune.

Un coupleur-répartiteur de ce type, destiné à la connexion de trois fibres optiques, est connu d'après le document The Transactions of the IECE of Japan, vol. E60, N° 3, pages 133 et 134. Toutefois, ce document ne prévoit aucun moyen pour assurer efficacement la solidarisation des fibres dans le coupleur-répartiteur.

L'invention a notamment pour but de remédier à cet inconvénient.

Elle propose à cet effet un coupleur-répartiteur à fibres optiques du type défini ci-dessus, qui est caractérisé en ce qu'il comprend une plaque rigide et des moyens de maintien des fibres en appui sur la plaque rigide, ces moyens de maintien étant obtenus à l'aide d'une rainure ménagée sur une surface d'un support qui, au moins au niveau de ladite surface, est en matériau mou par rapport aux fibres et déformable élastiquement, ladite surface étant tenue au contact de la plaque rigide, et les fibres étant tenues en sollicitation axiale vers l'intérieur de la rainure, pour solidariser les fibres en relation de contact de leurs faces frontales.

Avantageusement, la rainure du support est remplie d'un milieu liquide transparent formant adaptateur d'indice.

Dans un mode de réalisation préféré, le milieu liquide transparent est durcissable, en particulier aux ultraviolets, pour former une colle fixant les fibres à demeure sur la plaque rigide, en sorte que la plaque rigide peut être alors enlevée du support.

Dans ce mode de réalisation, le maintien des fibres en appui sur la plaque rigide est alors uniquement assuré par la colle puisque le support est enlevé.

Très avantageusement, la plaque rigide est transparente; elle est de préférence en verre, se trouvant ainsi constituée du même matériau de base que les fibres elles-mêmes.

De son côté, le procédé de fabrication d'un coupleur-répartiteur à fibres optiques selon l'invention est du type comprenant:

a) la préparation d'au moins deux tronçons de fibre optique par polissage latéral en biseau, et fracture dans la zone biseautée, de manière à obtenir des faces frontales planes, perpendiculaires à l'axe de la fibre, et à surface du type brillant miroir;

b) le positionnement des deux tronçons de fibre côté à côte de façon que leurs côtés biseautés soient au contact l'un de l'autre pour définir en réunion une face frontale commune de transmission de lumière, à surface du type brillant miroir, et de section droite sensiblement égale à celle d'une seule fibre, et

c) le positionnement des deux fibres ainsi préparées en regard d'une autre fibre ou d'une autre paire de fibres disposées comme les deux fibres précitées, de manière à mettre leurs faces frontales respectives en relation de contact.

Selon l'invention, le procédé est aménagé de la manière suivante:

- l'étape b) consiste à introduire côte à côte les extrémités des deux fibres biseautées dans une rainure, remplie d'un milieu liquide transparent formant adaptateur d'indice, et ménagée sur une surface d'un support qui, au moins au niveau de ladite surface, est en matériau mou par rapport à la fibre et déformable élastiquement, tout en maintenant une plaque rigide transparente surfacée en appui sur ladite surface du support, et à ajuster les positions relatives des fibres biseautées pour obtenir ladite surface frontale commune; et

- l'étape c) comprend l'introduction d'une autre fibre ou d'une autre paire de fibres par l'autre extrémité de la rainure jusqu'au contact avec la face frontale des deux fibres précitées, et le maintien de l'ensemble des fibres en cette position.

Dans le mode de réalisation préféré de l'invention, on utilise à l'étape b) un milieu liquide transparent durcissable, en particulier aux ultraviolets; à l'étape c), le maintien des fibres s'obtient alors par application de rayonnements ultraviolets sur la rainure, à travers la plaque rigide transparente, après quoi l'ensemble des fibres se trouve fixé à demeure sur la plaque rigide, qui peut alors être enlevée du support mou.

Un enrobage supplémentaire peut alors être rajouté sur les fibres solidaires de la plaque.

La variante de l'invention, au niveau du procédé, consiste simplement à maintenir les fibres en sollicitation axiale vers l'intérieur de la rainure, afin d'assurer le contact de leurs faces frontales.

Selon un autre aspect de l'invention, la rainure possède une section droite symétrique par rapport à une perpendicularité à la plaque rigide.

Dans un mode de réalisation particulier, la rainure comporte une zone centrale propre à recevoir l'extrémité dénudée des fibres, encadrée par deux zones latérales, propres à recevoir la ou les fibres, gaine comprise, ces deux zones latérales se terminant par des embouchures évasées de part et d'autre du support.

Selon un autre aspect encore de l'invention, l'étape a) comprend les opérations suivantes:

a.1) maintenir au moins une fibre optique enroulée en position fixe sur un mandrin cylindrique de diamètre choisi;

a.2) amener une génératrice du mandrin, fibre comprise, au contact d'une surface de polissage, en maintenant fermement ledit mandrin en appui sur la surface de polissage, de manière à polir en biseau une épaisseur choisie de chaque tour de la fibre; et

a.3) fracturer chaque tour de la fibre, sensiblement au milieu de la partie polie en biseau.

On obtient ainsi des éléments de fibres propres à la réalisation d'une série de coupleurs-répartiteurs à fibres optiques selon l'invention.

D'autres caractéristiques et avantages de l'invention apparaîtront à l'examen de la description détaillée qui va suivre, et des dessins annexés, sur lesquels:

- la figure 1 illustre schématiquement un mandrin sur lequel est enroulée une fibre;
- la figure 2 illustre l'appui du mandrin sur un disque de polissage pour le polissage en biseau de la fibre;
- la figure 3 est une vue en perspective correspondant à la figure 2;
- la figure 4 illustre plusieurs fibres polies latéralement en biseau à l'aide du dispositif des figures 2 et 3;
- la figure 5 illustre comment doit se faire l'interconnexion entre une fibre d'entrée et deux fibres de sortie entre lesquelles doit être réparti le signal de la fibre d'entrée;
- la figure 6 illustre les mêmes fibres, avec mise en coopération optique de leurs faces frontales respectives;
- les figures 7 et 7A illustrent deux variantes de réunion de deux fibres optiques pour obtenir une section droite comparable à celle d'une seule fibre;
- la figure 8 illustre un dispositif à plaque de verre et bloc rainuré en matériau mou pour la mise en oeuvre du procédé de l'invention;
- les figures 9 et 9A illustrent le début de l'introduction des fibres dans le dispositif;
- la figure 10 illustre les fibres complètement introduites, et soumises à un rayonnement ultraviolet, dans le cadre du mode de réalisation préféré de l'invention;

- la figure 11 illustre la variante de l'invention, dans laquelle on conserve le dispositif à plaque de verre et support mou rainuré dans le coupleur-répartiteur optique définitif; et

- les figures 12A et 12B illustrent le mode de réalisation préférentiel, dans lequel le coupleur-répartiteur optique définitif ne comprend que la plaque de verre et les fibres fixées sur celle-ci par collage.

La technique des fibres optiques fait à de nombreux titres intervenir des formes. A cet égard, les dessins annexés sont à considérer comme faisant partie intégrante de la présente description, pour contribuer autant que nécessaire à la définition de l'invention et à la suffisance de la description de celle-ci.

Par ailleurs, bien que la présente invention concerne d'abord le coupleur-répartiteur à fibres optiques, et ensuite son procédé de fabrication, il est apparu souhaitable, pour faciliter la compréhension de la description détaillée, d'indiquer tout d'abord sur un exemple comment l'on peut réaliser le polissage latéral des fibres optiques, de continuer la description du procédé de fabrication du coupleur-répartiteur selon cet exemple, et de terminer par le produit obtenu, à savoir le coupleur-répartiteur lui-même.

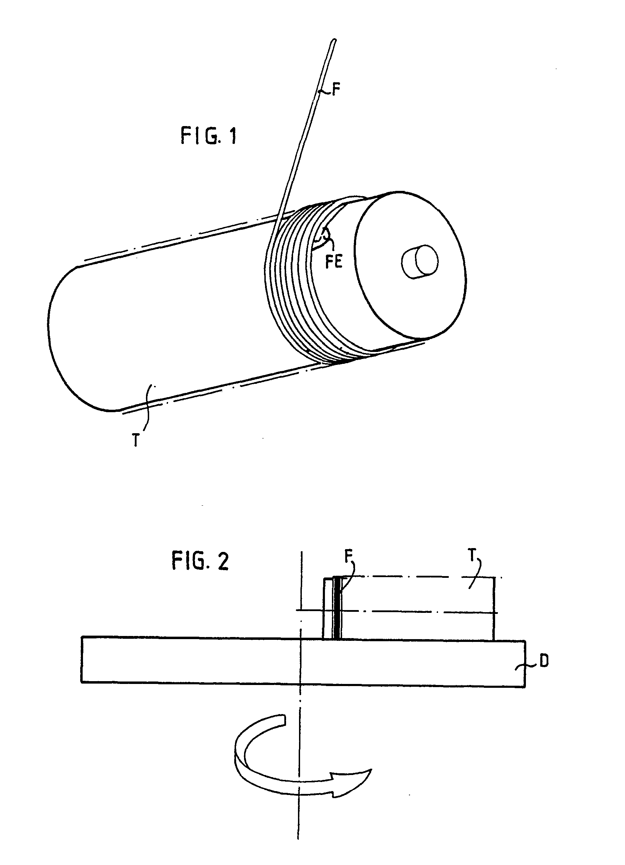

Sur la figure 1, est désigné par T un mandrin cylindrique, sur lequel est enroulée une fibre F. Une des extrémités de la fibre est collée en FE au mandrin. La fibre est ensuite enroulée en spires jointives sur le mandrin T, jusqu'à son autre extrémité qui est collée comme la première. On obtient ainsi une fixation rigide de toute la fibre sur le mandrin T, dès lors que celle-ci est enroulée de façon serrée et en spires jointives.

Une variante de l'invention consisterait à préformer un sillon sur le mandrin T, sillon dans lequel la fibre pourrait être enroulée en spires qui ne sont plus nécessairement jointives. Dans cette variante, la fibre demeure bien sûr fixée à ses deux extrémités.

Le rayon du mandrin T est déterminé en fonction de la longueur des morceaux de fibres dont on a besoin pour les coupleurs-répartiteurs, qui est typiquement de 25 à 30 cm, et surtout de la taille de l'ellipse de polissage latéral désirée, qui est typiquement de l'ordre du centimètre. Ces considérations ont amené actuellement à prendre un mandrin T dont le diamètre est de 15 centimètres.

La figure 2 montre comment le mandrin T équipé de l'enroulement complet de la fibre F est placé en appui sur un disque de polissage D, soumis à rotation. Sur sa surface de polissage, le disque D est muni d'un matériau abrasif très fin, typiquement de particules d'oxyde d'aluminium dont la taille est de quelques microns. D'autres matériaux de polissage peuvent être utilisés, notamment carbure de silicium, carbure de tungstène, et autres abrasifs propres au polissage du verre. Une seule passe de polissage est nécessaire. Toutefois, on peut aussi commencer par une première passe avec un grain un peu plus gros, et terminer par la passe finale à grain fin.

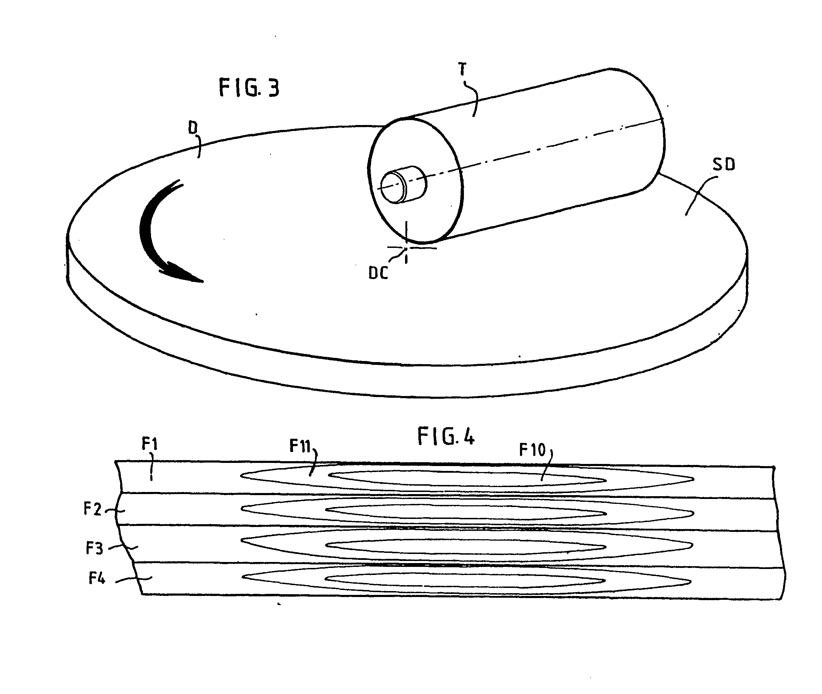

La figure 3 montre une vue en perspective du dispositif de polissage. Le disque de polissage D tourne sur lui-même autour de son centre DC. Le mandrin T est fermement tenu de sorte que les fibres qu'il porte soient au contact de la surface de polissage SD, en empêchant tout mouvement de rotation du mandrin T sur lui-même.

La détermination de l'effort d'appui du mandrin T sur le disque D, ainsi que de l'excursion admise pour le mandrin T vers le bas peut être faite expérimentalement. On peut notamment procéder avec un effort d'appui du mandrin T sur le disque D qui est constant, et obtenir l'épaisseur de polissage voulue par choix du temps pendant lequel le mandrin T est appliqué sur le disque D.

En règle générale, on polit les fibres à la moitié de leur épaisseur. Le résultat est illustré sur la figure 4, où les fibres sont montrées en vue agrandie, après avoir été déroulées. On voit sur chacune des fibres F1 à F4 une ellipse de polissage du coeur, notée F10, et une ellipse de polissage de la gaine, notée F11.

La fracture des fibres s'effectue normalement au milieu de l'ellipse F10. Cette fracture peut se faire par application des enseignements de la Demande de Brevet français 78 09703 de la Demanderesse, publiée sous le N° 2 422 604. En bref, il suffit de passer un petit diamant sur la perpendiculaire à l'axe des fibres, qui sont convenablement maintenues.

Après cela, on obtient des tronçons de fibres dont les deux extrémités sont polies en biseau. Un tel tronçon de fibre peut servir tel quel si plusieurs coupleurs-répartiteurs doivent être disposés en cascade. Dans le cas contraire, une nouvelle opération de fracture est effectuée sur chaque tronçon de fibre, en dehors de la zone biseautée. Ceci fournit un tronçon de fibres qui possède, à l'une de ses extrémités, une zone fracturée dans la zone biseautée à demiépaisseur, et à son autre extrémité une zone fracturée sur toute l'épaisseur de la fibre. Les faces frontales obtenues sont de type brillant miroir, et propres à l'interconnexion entre fibres.

Une autre variante consiste à faire la fracture de la zone biseautée de manière décalée par rapport au centre de l'ellipse F10. On obtient alors des segments de fibres complémentaires qui peuvent être réunis latéralement tout en conservant une dimension d'ensemble égale à celle d'une fibre unique, cela peut servir pour un couplage asymétrique, où l'une des fibres reçoit plus de lumière que l'autre.

Cependant, pour la réalisation du couplage asymétrique, il est actuellement préféré d'ajuster les temps de polissage de façon à obtenir en deux opérations séparées, et le cas échéant avec des diamètres de mandrins différents, deux tronçons de fibres polis en biseau de manière complémentaire et qui puissent donc être réunis pour posséder une dimension d'ensemble égale à celle d'une fibre unique.

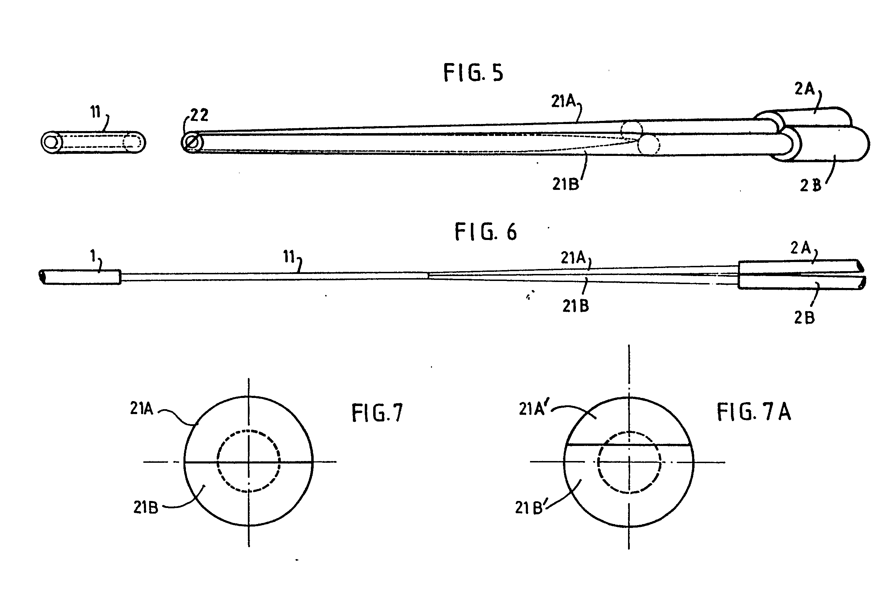

Les figures 7 et 7A montrent respectivement:
— pour la figure 7 la réunion de deux fibres polies toutes deux à demi-épaisseur;

— pour la figure 7A, la réunion d'une fibre polie au tiers de son épaisseur avec une fibre polie aux deux tiers de son épaisseur (coupleur asymétrique).

La suite de la présente description se place dans le cadre de deux fibres polies à la moitié de leur épaisseur, selon la figure 7, étant observé qu'elle peut être transposée aisément au cas de la figure 7A.

Sur la figure 5, on a représenté deux fibres 2A et 2B dont les extrémités dégainées 21A et 21B sont réunies par mise en contact de leurs faces biseautées, offrant ainsi une face frontale d'extrémité 22 comparable à celle de la fibre unique 11 placée en regard.

La figure 6 montre le même ensemble de fibres, avec les faces frontales mises au contact l'une de l'autre.

Il est clair que, pour certaines applications, on pourra remplacer la fibre 1 et son extrémité 11 par un autre ensemble de deux fibres réunies, semblables aux fibres 2A et 2B avec leurs extrémités 21A et 21B qui sont en regard.

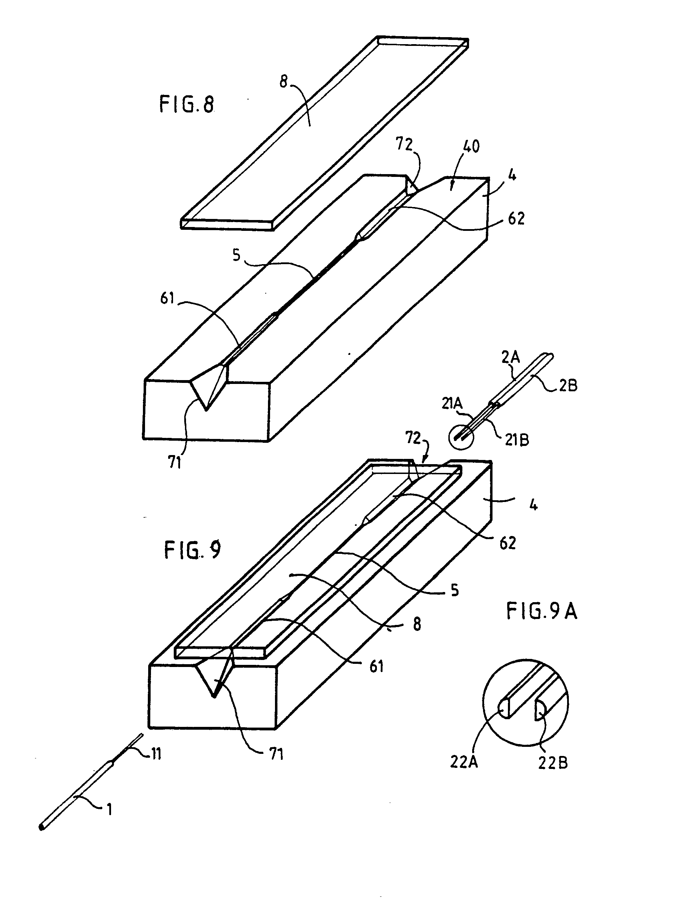

La figure 8 fait apparaître un moyen destiné à la mise en oeuvre du procédé de l'invention, que l'on va maintenant décrire.

L'un des éléments du dispositif est un support en matériau mou 4, de préférence de forme parallélépipédique. Ce support 4 est réalisé en un matériau mou par rapport aux fibres, tel qu'un élastomère déformable élastiquement. Le support 4 comporte une surface supérieure désignée par 40, dans laquelle est pratiquée au moins une rainure notée 5.

De préférence, la rainure 5 est définie dans la partie centrale de la surface 40, et sa forme est choisie pour correspondre aux extrémités dénudées des fibres. Cette rainure 5 est encadrée de deux rainures plus importantes 61 et 62, sensiblement alignées sur elle, et ces rainures latérales 61 et 62 débouchent à leur tour par des embouchures évasées 71 et 72 à l'extérieur du support 4. Ici, le support 4 est supposé dans son ensemble réalisé en matériau mou. Il suffit, pour la mise en oeuvre de l'invention, que le matériaum ou soit présent au voisinage immédiat de la surface 40 du support.

L'autre élément du dispositif est une plaque rigide 8, en l'espèce une plaque de verre transparente, que l'on va venir mettre en appui sur la surface 40 du support 4. Un dispositif analogue est décrit, à d'autres fins, dans les Demandes de Brevet européen N° 84400448.1 et N° 84401575.0.

Le contenu de ces demandes antérieures est à considérer comme incorporé à la présente description, pour contribuer si nécessaire à une meilleure compréhension du dispositif de la figure 8, et des variantes que l'on peut en concevoir.

En particulier, les demandes antérieures décrivent différentes formes de rainures.

Actuellement, la Demanderesse estime que, pour les applications de coupleur-répartiteur, il est souhaitable que la rainure possède, en section droite, une forme symétrique par rapport à une perpendiculaire à la plaque rigide, c'est-à-dire à la surface 40. Ont donné particulièrement satisfaction les rainures dont la section droite est en forme de v ou en forme de U.

Il est maintenant fait référence à la figure 9. Par un bout du support 4, on engage l'une après l'autre ou simultanément les extrémités 21A et 21B des fibres 2A et 2B, leurs faces biseautées étant en regard, comme le montre la figure 9A. Les deux fibres sont ainsi poussées jusqu'à ce que leurs faces frontales se trouvent approximativement au milieu de la rainure 5. Leur position relative est ensuite ajustée de façon qu'elles définissent une face frontale commune par réunion de leurs demi-faces frontales 22A et 22B (figure 9A).

Par l'autre extrémité, on engage une fibre 1, dont l'extrémité 11 va aller jusqu'au contact de la face frontale 22A et 22B. Une légère poussée sur la fibre 1 assure la bonne intimité des faces frontales des fibres, ainsi que l'élimination du léger décalage qui pourrait subsister entre les faces frontales 22A et 22B.

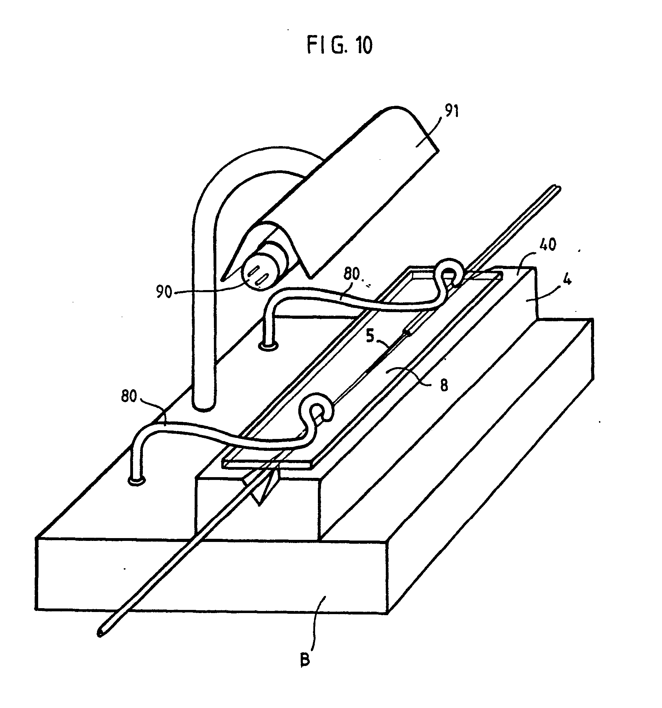

La figure 9 illustre cette opération sans qu'aucun bâti ne supporte le dispositif constitué du support 4 et de la plaque 8. En fait, la figure 10 montre un bâti B qui sert à la mise en oeuvre du procédé. Le support mou 4 est posé sur le bâti B, et la plaque de verre 8 est maintenue en appui sur le support 4, maintenant à son tour celui-ci en appui sur le bâti B. L'effort d'appui est obtenu par deux étriers 80 solidaires du bâti B. La mise en place des fibres peut se faire dans cette position.

Dans ce mode de réalisation préféré, le milieu adaptateur d'indice qu'il est connu de placer dans un connecteur de fibres optiques est choisi comme étant une colle durcissable aux ultraviolets, comme la colle liquide polymérisable aux rayonnements ultraviolets vendue par la Société LOCTITE sous la marque Glass-Bond. Bien entendu, on peut utiliser d'autres milieux adaptateurs d'indice durcissables, en réponse à d'autres agents que les ultra-violets.

Dans le cas des ultraviolets, on prévoit dans le dispositif de la figure 10 un support pour un tube à rayons ultra-violets 90 aligné parallèlement à l'axe de la rainure 5, et muni d'un réflecteur 91 dirigeant le rayonnement principalement vers cette rainure. Le milieu durcissable est ainsi insolé par les rayons ultraviolets pendant le temps permettant sa polymérisation complète.

Après cela, on peut enlever la plaque de verre 8, qui emmène avec elle les fibres optiques, tenues par la colle. On a observé en effet que la colle précitée n'adhère pratiquement pas sur le support en matériau mou 40, et en particulier ne produit aucune dégradation de surface de celui-ci, ni en sa surface 40, ni dans la rainure elle-même.

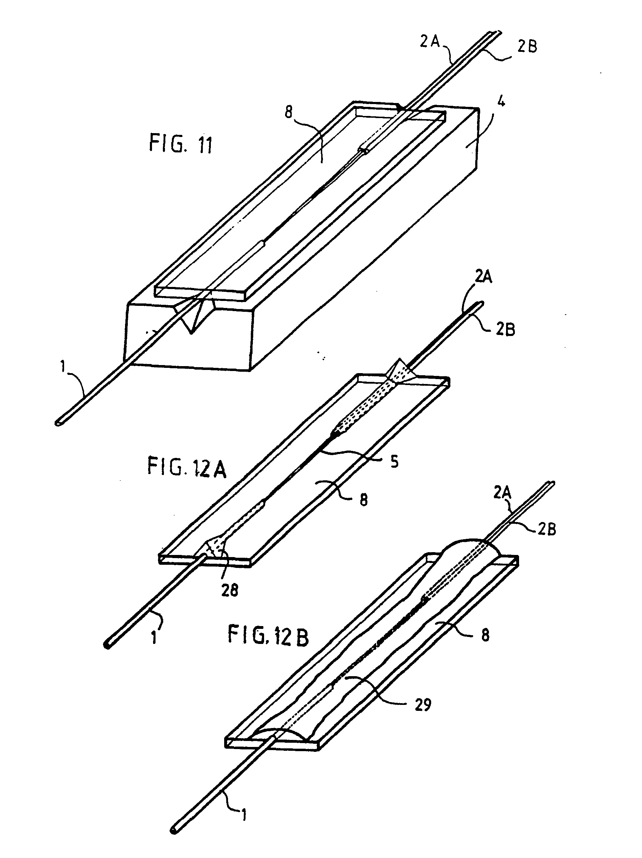

Le coupleur-répartiteur optique présente maintenant sa forme de base définitive. Il est illustré, renversé, sur la figure 12A, où l'on reconnaît la plaque de verre 8, une fibre 1, et à l'autre extrémité deux fibres 2A et 2B. Un très mince joint de colle tient les fibres dans leurs parties dénudées, au niveau de ce qui était la rainure 5. Ce joint de colle possède d'ailleurs la forme de la rainure 5 et les extrémités des fibres affleurent au niveau où elles venaient au contact de cette rainure. De part et d'autre, le joint de colle 28 possède une épaisseur plus importante, correspondant aux rainures latérales 61 et 62 ainsi qu'aux embouchures d'extrémités 71 et 72.

On applique alors un enrobage protecteur sur le joint 28, par exemple comme illustré sous la forme d'une résine 29 dans la figure 12B.

Les extrémités libres des tronçons de fibres 2A et 2B peuvent être placées dans des connecteurs de fibres optiques traditionnels, de préférence ceux décrits dans les demandes de brevets et d'addition précitées de la Demanderesse. La liaison se prolonge alors par des fibres plus longues. En variante, si une nouvelle répartition de lumière est désirée, les extrémités libres des fibres 2A et 2B sont à leur tour engagées, en tant que fibre unique (c'est-à-dire comme la figure 1 de la présente description) dans d'autres coupleurs-répartiteurs optiques agencés comme il vient d'être décrit.

Un tel montage pourra faire intervenir des coupleurs possédant deux fibres biseautées de chaque côté, dits coupleurs en X ou à quatre portes.

L'invention apporte ainsi un moyen essentiel pour le câblage en fibres optiques de zones géographiques étendues.

On reviendra maintenant à la figure 11, qui représente le dispositif utilisé dans la mise en oeuvre du procédé de l'invention, séparé du bâti B portant la source de rayons ultraviolets.

Dans une variante de l'invention, le milieu liquide adaptateur d'indice qui peut être placé dans la rainure 5 n'est pas durci (en certains cas, on peut se dispenser d'un milieu adaptateur d'indice). Le dispositif illustré sur la figure 11 est alors associé à un boîtier rigide permettant d'une part le maintien de la plaque rigide 8 au contact du support en matériau mou 4, et d'autre part le maintien axial des fibres 1 et 2A et 2B de façon qu'elles demeurent sollicitées l'une vers les autres, comme décrit par exemple dans la Demande de Brevet européen No 8440048.1 (publiée sous le No 122 169). A ce titre, les différents modes de réalisation décrits dans la demande antérieure sont à considérer comme incorporés à la présente description.

Quoiqu'il soit plus encombrant que la version des figures 12A et 12B, le coupleur-répartiteur ainsi obtenu peut être préféré en certains cas, notamment en ce qu'il permet un démontage à volonté des différentes fibres optiques utilisées.

Enfin, il est avantageux, pour faciliter le bon positionnement relatif des extrémités des fibres, que celles-ci soient colorées latéralement, par exemple comme décrit dans la demande de Brevet européen No 84400448.1. En particulier, des colorations différentes des extrémités dénudées des fibres 2A et 2B sont intéressantes, de même éventuellement qu'une troisième coloration pour l'extrémité dénudée de la fibre 1.

**Revendications**

1. Coupleur-répartiteur à fibres optiques, du type comprenant d'un côté deux fibres optiques (2A, 2B) polies latéralement en biseau à l'une de leurs extrémités, lesquelles extrémités (21A, 21B) sont positionnées pour définir en réunion une face frontale commune, de section droite sensiblement égale à celle d'une seule fibre, de l'autre côté une autre fibre (11) ou une autre paire de fibres optiques disposées comme les deux fibres optiques précitées (2A, 2B) pour définir en réunion une face frontale commune, caractérisé en ce qu'il comprend une plaque rigide (8) et des moyens de maintien des fibres en appui sur la plaque rigide, ces moyens de maintien étant obtenus à l'aide d'une rainure (5) ménagée sur une surface (40) d'un support (4) qui, au moins au niveau de ladite surface, est en matériau mou par rapport aux fibres et déformable élastiquement, ladite surface étant tenue au contact de la plaque rigide, et les fibres étant tenues en sollicitation axiale vers l'intérieur de la rainure, pour solidariser les fibres en relation de contact de leurs faces frontales.

2. Coupleur-répartiteur selon la revendication 1, caractérisé en ce que la rainure (5) est remplie d'un milieu liquide transparent formant adaptateur d'indice.

3. Coupleur-répartiteur selon la revendication 2, caractérisé en ce que le milieu liquide transparent est durcissable, en particulier aux ultraviolets, pour former une colle (28) fixant les fibres à demeure sur la plaque rigide (8) en sorte que la plaque rigide peut être alors enlevée du support (4).

4. Coupleur-répartiteur selon l'une des revendications précédentes, caractérisé en ce que la plaque rigide (8) est transparente.

5. Coupleur-répartiteur selon l'une des revendications précédentes, caractérisé en ce que la plaque rigide (8) est en verre.

6. Coupleur-répartiteur selon l'une des revendications précédentes, caractérisé en ce que les extrémités des fibres sont colorées latéralement.

7. Procédé de fabrication d'un coupleur-répartiteur à fibres optiques, comprenant:

a) la préparation d'au moins deux tronçons de fibres optiques (2A, 2B) par polissage latéral en biseau et fracture dans la zone biseautée de manière à obtenir des faces frontales planes, perpendiculaires à l'axe, et à surface du type brillant miroir,

b) le positionnement des deux tronçons de fibres (2A, 2B) côte à côte de façon que leurs côtés biseautés (21A, 21B) soient au contact l'un de l'autre pour définir en réunion une face frontale commune de transmission de lumière, à surface du type brillant miroir, et de section droite sensiblement égale à celle d'une seule fibre, et

c) le positionnement des deux fibres ainsi préparées en regard d'une autre fibre ou d'une autre paire de fibres disposées comme les deux fibres précitées de manière à mettre leurs faces frontales respectives en relation de contact, caractérisé en ce que:

— l'étape b) consiste à introduire côte à côte les extrémités (21A, 21B) des deux fibres biseautées dans une rainure (5), emplie d'un milieu liquide transparent formant adaptateur d'indice, et ménagée sur une surface (40) d'un support (4) qui, au moins au niveau de ladite surface, est en matériau mou par rapport à la fibre et déformable élastiquement, tout en maintenant une plaque rigide transparente surfacée (8) en appui sur ladite surface du support, et à ajuster les positions relatives des fibres biseautées (21A, 21B) pour obtenir ladite face frontale commune, et

en ce que l'étape c) comprend l'introduction d'une autre fibre (1) ou d'une autre partie de fibres par l'autre extrémité de la rainure jusqu'au contact avec la face frontale des deux fibres précitées, et le maintien de l'ensemble des fibres en cette position.

8. Procédé selon la revendication 7, caractérisé en ce qu'à l'étape b), le milieu liquide transparent (59) est durcissable, en particulier aux ultraviolets, et en ce qu'à l'étape c), le maintien des fibres s'obtient par application de rayonnements ultraviolets (90) sur la rainure, à travers la plaque rigide transparente, après quoi l'ensemble des fibres se trouve fixé à demeure (28) sur la plaque rigide (8) qui peut être alors enlevée du support (4).

9. Procédé selon la revendication 8, caractérisé en ce qu'à l'étape c), un enrobage supplémentaire est ajouté sur les fibres solidaires de la plaque rigide (8).

10. Procédé selon l'une des revendications 7 à 9, caractérisé en ce que, en section droite, la rainure (5) est symétrique par rapport à une perpendiculaire à la plaque rigide (8).

11. Procédé selon la revendication 10, caractérisé en ce que la rainure comporte une zone centrale (5), propre à recevoir les extrémités dénudées des fibres, encadrée par deux zones latérales (61, 62) propres à recevoir la ou les fibres, gaine comprise, ces deux zones latérales se terminant par des embouchures évasées (71, 72) de part et d'autre du support (4).

12. Procédé selon l'une des revendications 10 et 11, caractérisé en ce que la rainure (5) possède une section droite en forme de V.

13. Procédé selon l'une des revendications 10 et 11, caractérisé en ce que la rainure (5) possède une section droite en forme de U.

14. Procédé selon l'une des revendications 7 à 13, caractérisé en ce que l'étape a) comprend les opérations suivantes:

a.1) maintenir au moins une fibre optique (F) enroulée en position fixe sur un mandrin cylindrique (T) de diamètre choisi;

a.2) amener une génératrice du mandrin, fibre comprise, au contact d'une surface de polissage (D), en maintenant fermement ledit mandarin (T) en appui sur la surface de polissage de manière à polir en biseau une épaisseur choisie de chaque tour de la fibre, et

a.3) fracturer chaque tour de la fibre (F), sensiblement au milieu de la partie polie en biseau (F10).

**Patentansprüche**

1. Faseroptische Verteilungskupplung, mit einerseits zwei an ihrem einen Ende seitlich schräg geschliffenen Lichtleitfasern (2A, 2B), wobei diese Enden (21A, 21B) angeordnet sind, um zusammen eine gemeinsame Stirnfläche mit einem Profilschnitt zu definieren, der merklich gleich dem einer einzelnen Faser ist, und andererseits mit einer Faser (11) oder einem Paar von Lichtleitfasern, die wie die beiden vorgenannten Lichtleitfasern (2A, 2B) angeordnet sind, um zusammen eine gemeinsame Stirnfläche zu definieren, dadurch gekennzeichnet, dass sie eine starre Platte (8) und Mittel zur Lagestabilisierung der Fasern auf der starren Platte umfasst, wobei diese Stabilisierungsmittel mit Hilfe einer Nute (5) verwirklicht werden, die in einer Oberfläche (40) eines Auflagers (4) ausgespart ist, das wenigstens auf der Ebene der genannten Oberfläche aus einem im Verhältnis zu den Fasern weichen und elastisch verformbaren Werkstoff besteht, wobei die genannte Oberfläche mit der starren Platte in Berührung gehalten wird und die Fasern einer axial gegen das Innere der Nute gerichteten Beanspruchung unterworfen sind, um die mit ihren Stirnflächen in Kontakt stehenden Fasern fest miteinander zu verbinden.

2. Verteilungskupplung nach Anspruch 1, dadurch gekennzeichnet, dass die Nute (5) mit einer einen Brechzahladapter bildenden transparenten Flüssigkeit gefüllt ist.

3. Verteilungskupplung nach Anspruch 2, dadurch gekennzeichnet, dass diese transparente Flüssigkeit insbesondere unter der Einwirkung ultravioletter Strahlen aushärtbar ist, um einen Kleber (28) zu bilden, durch den die Fasern dauerhaft auf der starren Platte (8) derart befestigt werden, dass die starre Platte alsdann von dem Auflager (4) abgenommen werden kann.

4. Verteilungskupplung nach einem der vorstehenden Ansprüche, dadurch gekennzeichnet, dass die starre Platte (8) transparent ist.

5. Verteilungskupplung nach einem der vorstehenden Ansprüche, dadurch gekennzeichnet, dass die starre Platte (8) aus Glas besteht.

6. Verteilungskupplung nach einem der vorstehenden Ansprüche, dadurch gekennzeichnet, dass die Faserenden seitlich gefärbt sind.

7. Verfahren zur Herstellung einer faseroptischen Verteilungskupplung, mit den nachfolgenden Arbeitsgängen:

a) Vorbereitung von wenigstens zwei Lichtleitfaserabschnitten (2A, 2B) durch seitliches Schräganschleifen und Bruch in dem abgeschrägten Bereich zur Erzielung ebener, senkrecht zur Achse verlaufender Stirnflächen mit spiegelnder Oberfläche;

b) Positionierung der beiden Faserabschnitte (2A, 2B) nebeneinander, so dass ihre abgeschrägten Flächen (21A, 21B) miteinander in Kontakt stehen, um zusammen eine gemeinsame Stirnfläche zur Lichtübertragung mit spiegelnder Oberfläche zu definieren, deren Profilschnitt merklich gleich dem einer einzelnen Faser ist, und

c) Positionierung der beiden derart vorbereiteten Fasern im Verhältnis zu einer anderen Faser oder zu einem anderen Faserpaar, das wie die beiden vorgenannten Fasern derart angeordnet ist, dass ihre jeweiligen Stirnflächen miteinander in Kontakt stehen, dadurch gekennzeichnet, dass die Etappe b) darin besteht, die Enden (21A, 21B) der beiden abgeschrägten Fasern nebeneinander in eine Nute (5) einzubringen, die mit einer einen Brechzahladapter bildenden transparenten Flüssigkeit gefüllt und in einer Oberfläche (40) eines Auflagers (4) ausgespart ist, das wenigstens auf der Ebene der genannten Oberfläche aus einem im Verhältnis zur Faser weichen und elastisch verformbaren Werkstoff besteht, und gleichzeitig eine ebene, transparente starre Platte (8) in Auflage auf der genannten Auflagerfläche zu halten und zur Erzielung der genannten gemeinsamen Stirnfläche die gegenseitigen Stellungen der abgeschrägten Fasern (21A, 21B) zu justieren; und dass die Etappe c) die Einführung einer anderen Faser (1) oder eines anderen Faserabschnittes vom anderen Ende der Nute her, bis zur Berührung mit der Stirnfläche der beiden vorgenannten Fasern, und die Festlegung der Fasereinheit in dieser Stellung umfasst.

8. Verfahren nach Anspruch 7, dadurch gekennzeichnet, dass die transparente Flüssigkeit (59) insbesondere unter Einwirkung ultravioletter Strahlen in der Etappe b) aushärtbar ist, und dass die Festlegung der Fasern in der Etappe c) durch Anwendung ultravioletter Strahlungen (90) auf die Nute, durch die starre transparente Platte hindurch, erzielt wird, worauf die Fasereinheit dauerhaft (28) auf der starren Platte (8) fixiert ist, die alsdann von dem Auflager (4) abgenommen werden kann.

9. Verfahren nach Anspruch 8, dadurch gekennzeichnet, dass in der Etappe c) eine zusätzliche Umhüllung der fest mit der starren Platte (8) verbundenen Fasern erfolgt.

10. Verfahren nach einem der vorstehenden Ansprüche 7 bis 9, dadurch gekennzeichnet, dass die Nute (5) im Profilschnitt symmetrisch zu einer Senkrechten auf die starre Platte (8) verläuft.

11. Verfahren nach Anspruch 10, dadurch gekennzeichnet, dass die Nute einen mittleren Bereich (5) zur Aufnahme der blanken Faserenden aufweist, der von zwei seitlichen Bereichen (61, 62) zur Aufnahme der Faser(n), einschliesslich ihrer Umhüllung, eingerahmt ist, wobei diese beiden seitlichen Bereiche in konisch erweiterte Mündungen (71, 72) beiderseits des Auflagers (4) auslaufen.

12. Verfahren nach einem der vorstehenden Ansprüche 10 und 11, dadurch gekennzeichnet, dass die Nute (5) einen V-förmigen Querschnitt aufweist.

13. Verfahren nach einem der vorstehenden Ansprüche 10 und 11, dadurch gekennzeichnet, dass die Nute (5) einen U-förmigen Querschnitt aufweist.

14. Verfahren nach einem der vorstehenden Ansprüche 7 bis 13, dadurch gekennzeichnet, dass die Etappe a) die folgenden Arbeitsschritte umfasst:

a.1) Festlegung wenigstens einer in fester Stellung auf einen zylindrischen Dorn (T) eines gewählten Durchmessers aufgerollten Lichtleitfaser (F);

a.2) Zustellung einer Mantellinie des Dorns, einschliesslich Faser, gegen eine Polierfläche (D), wobei der genannte Dorn (T) fest in Anlage gegen die genannte Polierfläche gehalten wird, so dass bei jeder Windung der Faser eine gewählte Dicke abgefast wird, und

a.3) Abbruch jeder Windung der Faser (F) merklich in der Mitte des schräg polierten Abschnittes (F10).

**Claims**

1. An optical fiber divider-coupler of the type comprising, at one end, two optical fibers (2A, 2B) each of which has a polished chamfered side at one of its ends, said fibre ends (21A, 21B) being positioned so that together they define a common front face of cross section substantially equal to that of a single fiber, and at its other end another fiber (11) or another pair of optical fibers disposed like the two above-mentioned optical fibers (2A, 2B) in order together to define a common front face, the divider-coupler being characterized in that it includes a rigid plate (8) and retaining means for holding the fibers pressed against the rigid plate, said retaining means being obtained by means of a groove (5) formed in a surface (40) of a support (4) which, at least at said surface, is made of a material which is elastically deformable and which is soft relative to the fibers, said surface being held in contact with the rigid plate and the fibers being held so as to be urged axially into the groove, thereby keeping the fibers in contact via their front faces.

2. A divider-coupler according to claim 1, characterized in that the groove (5) is filled with a transparent liquid medium constituting a refractive index matching medium.

3. A divider-coupler according to claim 2, characterized in that the transparent liquid medium is capable of being set, in particular on application of ultraviolet radiation, thereby forming a glue (28) permanently fixing the fibers to the rigid plate (8) so that the rigid plate can then be removed from the support (4).

4. A divider-coupler according to any preceding claim, characterized in that the rigid plate (8) is transparent.

5. A divider-coupler according to any preceding claim, characterized in that the rigid plate (8) is made of glass.

6. A divider-coupler according to any preceding claim, characterized in that the ends of the fibers have colored sides.

7. A method of manufacturing an optical fiber divider-coupler, the method comprising:

a) preparing at least two lengths of optical fiber (2A, 2B) by polishing a lateral chamfer thereon and by breaking in the chamfered zone so as to obtain two plane front faces having mirror-smooth surfaces perpendicular to the axis;

b) positioning the two lengths of fiber (2A, 2B) side by side so that their chamfered sides (21A, 21B) make contact with each other so that together they define a common light-transmitting front face having a mirror-smooth surface and a cross section substantially equal to that of a single fiber; and

c) positioning the two fibers prepared in this way facing another fiber or another pair of fibers disposed like the two above-mentioned fibers so as to place their respective front faces into contact, the method being characterized in that:

step b) consists in inserting the ends (21A, 21B) of the two chamfered fibers side by side in a groove (5) filled with a transparent liquid medium constituting a refractive index matching medium and formed in a surface (40) of a support (4), which support, at least at said surface, is made of a material which is elastically deformable and which is soft relative to the fibers, while holding a surfaced transparent rigid plate (8) bearing against said support surface, and in adjusting the relative positions of the chamfered fibers (21A, 21B) in order to obtain said common front face; and

in that step c) comprises inserting another fiber (I) or another pair of fibers via the other end of the groove until contact is made with the front face of the two above-mentioned fibers, and holding the set of fibers in this position.

8. A method according to claim 7, characterized in that in step b), the transparent liquid medium (59) is capable of being set, in particular by ultraviolet radiation, and in that in step c), the fibers are held by applying ultraviolet radiation (90) to the groove through the transparent rigid plate, after which the set of fibers is permanently fixed (28) on the rigid plate (8) and may then be removed from the support (4).

9. A method according to claim 8, characterized in that in step c), an additional coating is applied to the fibers fixed to the rigid plate (8).

10. A method according to any one of claims 7 to 9, characterized in that the cross section of the groove (5) is symmetrical about a perpendicular to the rigid plate (8).

11. A method according to claim 10, characterized in that the groove includes a central zone (5) suitable for receiving the stripped ends of the fibers, said central zone lying between two end zones (61, 62) suitable for receiving the fiber(s), sheath included, said two end zones terminating by flared openings (71, 72) at opposite ends of the support (4).

12. A method according to claim 10 or 11, characterized in that the groove (5) has a V-shaped cross section.

13. A method according to claim 10 or 11, characterized in that the groove (5) has a U-shaped cross section.

14. A method according to any one of claims 7 to 13, characterized in that step a) comprises the following operations:

a.1) holding at least one optical fiber (F) wound in a fixed position on a cylindrical mandrel (T) of selected diameter;

a.2) bringing a generator line of the mandrel together with the fiber into contact with a polishing surface (D) and holding said mandrel (T) firmly against the polishing surface so as to polish a chamfer of selected thickness in each turn of the fiber; and

a.3) breaking each turn of the fiber (F) substantially in the middle of the chamfer-polished portion (F10).

FIG. 1

FIG. 2

FIG. 3

FIG. 4

FIG. 5

11

22

21A

21B

2A

2B

FIG. 6

1

11

21A

21B

2A

2B

21A

FIG. 7

21B

21A'

FIG. 7A

21B'

EP 0 151 065 B1

FIG.8

FIG. 9

FIG.9 A

FIG. 10

FIG. 11

2A
2B
8
4
1

FIG. 12A

2A
2B
5
8
1
28

FIG. 12B

2A
2B
8
1
29